# EUROPEAN PATENT SPECIFICATION

(11) **EP 2 898 739 B1**
(45) Date of publication and mention of the grant of the patent: **19.09.2018**
(21) Application number: 13838502.6
(22) Date of filing: 27.05.2013
(51) Int. Cl.: H04W 72/04

(54) **METHODS, TERMINALS, AND SYSTEMS FOR FACILITATING DATA SHARING**
VERFAHREN, ENDGERÄTE UND SYSTEME ZUR ERMÖGLICHUNG EINER DATENFREIGABE
PROCÉDÉS, TERMINAUX ET SYSTÈMES POUR FACILITER UN PARTAGE DE DONNÉES

(30) Priority: 21.09.2012 CN 201210355298
(43) Date of publication of application: 29.07.2015
(73) Proprietor: TENCENT TECHNOLOGY (SHENZHEN) COMPANY LIMITED, Shenzhen City, Guangdong 518044 (CN)
(72) Inventor: SHI, Jie, Shenzhen Guangdong 518044 (CN); MAO, Xiaobo, Shenzhen Guangdong 518044 (CN); WANG, Can, Shenzhen Guangdong 518044 (CN); GUO, Jianan, Shenzhen Guangdong 518044 (CN); LI, Na, Shenzhen Guangdong 518044 (CN)
(74) Representative: Eisenführ Speiser
(86) International application number: PCT/CN2013/076248
(87) International publication number: WO 2014/044057

(56) References cited:
- CN-A- 101 951 691
- CN-A- 102 404 861
- CN-A- 102 883 449
- US-A1- 2006 221 858
- US-A1- 2010 295 512
- US-A1- 2011 201 275
- US-A1- 2012 026 992
- US-B1- 7 978 665

## Description

### Field

The present disclosure relates to computer technologies, and in particular, to methods, terminals, and systems for sharing data.

### Background

Network access points such as Wi-Fi hotspots can be accessed by wireless devices, such as mobile phones, laptop computers, tablet personal computers (PCs) with wireless capabilities, and PCs equipped with wireless network cards, by broadcasting their identifiers such as Service Set Identifiers (SSID). The wireless devices can access the Internet via the hotspots to surf the Web or share data through services such as microblogs and cloud-based data sharing services.

However, if a terminal has no access to any external network access point such as a Wi-Fi hotspot, it typically would not be able to share data via these data sharing services, e.g., microblogs and cloud-based data sharing services.

US 2011/201275A1 discloses a method for management of a dynamic network using wireless communication device. In the method, a short-range communication is established between two wireless communication devices, with one of the wireless communication devices connecting with a network and serves as an access point for the other wireless communication device to access the network.

US 2012/026992 A1 discloses a method for utilizing one or more mobile devices to provide Internet access to one or more client computers. In the method, a Wi-Fi AP Client 100 may establish hotspot to generate Wi-Fi WLAN and other clients can connect to the AP client 100 and send a webpage request, then the AP client 100 forwards the request to the cloud server which will then send the requested content to the AP client 100.

US 2006/221858 A1 discloses a method for creating or joining an ad-hoc network. If a user wants to create an ad-hoc network, a new group is named, and the user may modify the computer's connection settings, for example, identifying a wireless network interface card. Then the user can use the network. If a user wants to join an ad-hoc network, a beacon including the ad-hoc network's name or SSID may be sensed, and then the user can joins the selected ad-hoc network.

### Summary

Embodiments of the disclosure provide methods, terminals, and systems for facilitating data sharing, allowing a user to create a hotspot on a wireless-enabled terminal to connect to a network to share data.

In one embodiment, a method of facilitating data sharing is provided according to claims 1-2.

In one embodiment, a connecting terminal for facilitating data sharing is provided according to claims 3-4.

In one embodiment, a system for facilitating data sharing is provided according to claims 5-6.

The embodiments can allow a user to create a hotspot on a smart terminal to connect to a network to share data when there is no available network access point.

### Brief Description of the Drawings

Fig. 1 is a flow chart illustrating an exemplary method of facilitating data sharing, according to an embodiment of the present disclosure.
Fig. 2 is a flow chart illustrating an exemplary method of facilitating data sharing, according to another embodiment of the present disclosure.
Fig. 3 is a flow chart illustrating an exemplary process of a data-sharing terminal connecting to another terminal acting as a network hotspot, according to an embodiment of the present disclosure.
Fig. 4 is a flow chart illustrating an exemplary method of facilitating data sharing, according to another embodiment of the present disclosure.
Fig. 5 is a block diagram illustrating the exemplary structure of a connecting *(i.e.,* hotspot) terminal for facilitating data sharing, according to an embodiment of the present disclosure.
Fig. 6 is a block diagram illustrating the exemplary structure of a connecting (*i.e.,* hotspot) terminal for facilitating data sharing, according to another embodiment of the present disclosure.
Fig. 7 is a block diagram illustrating the exemplary structure of a data-sharing terminal, according to an embodiment of the present disclosure.
Fig. 8 is a block diagram illustrating the exemplary structure of a system for facilitating data sharing, according to an embodiment of the present disclosure.
Fig. 9 is a block diagram illustrating the exemplary structure of another system for facilitating data sharing among multiple devices, according to an embodiment of the disclosure.
Figs. 10a and 10b illustrate two exemplary screens as a part of the hotspot creation interface, according to an embodiment of the disclosure.
Figs. 11a-11d illustrate four exemplary screens as a part of a data sharing process, according to an embodiment of the disclosure.
Fig. 12 illustrates exemplary common components of a terminal, according to an embodiment of the disclosure.

### Detailed Description

A detailed description of the technical solutions of the embodiments of the present disclosure is provided below in view of the accompanying drawings. It should be understood that the embodiments described below are representative embodiments of the present disclosure rather than a complete disclosure of the every possible embodiment. The present disclosure can also include any other embodiments that can be derived from these disclosed embodiments by a person with ordinary skill in the art without any additional inventive work. It is to be understood that other embodiments can be used and structural changes can be made without departing from the scope of the embodiments of this disclosure.

This disclosure generally relates to systems and methods for providing a network access point such as a wireless hotspot when none is available. More specifically, a wireless-enabled device (or terminal) can use its at least one wireless resource to create a wireless hotspot. The device can then broadcast the identification information of the hotspot to allow other devices (or terminals) to connect to a network (*e.g.,* the Internet) through the hotspot. This can allow the other devices (or terminals) to access data sharing services/applications available on the network and, in turn, share data with each other using these services/applications. Alternatively, by creating a Wi-Fi hotspot on one of the devices, all devices connected to the same Wi-Fi hotspot including the device hosting the hotspot can exchange data with each other wirelessly and efficiently, even when there is no access to an external network.

As referred hereinafter, devices can be any electronic device with wireless network capability and/or capable of connecting to a network through a wireless network access point for transmitting and receiving data. Such devices can include, but are not limited to, PCs, Macs, desktop computers, laptop computers, tablet PCs, smartphones including iPhones, Android phones, Windows phones, and Blackberries, e-readers, in-car communication devices, televisions and other consumer electronic devices with sufficient wireless network capabilities.

Furthermore, the devices can also be referred to as terminals (*i.e.,* "device" and "terminal" are interchangeable terminologies). For example, the device on which a wireless hotspot can be created can be referred to as a hotspot terminal or a connecting terminal (*i.e.,* "hotspot terminal" and "connecting terminal" are interchangeable terminologies). The devices using the hotspot terminal (or connecting terminal) to connect to a network can be referred to as data-sharing devices. Hotspot terminals can themselves be data-sharing terminals. The hotspot terminal and data-sharing terminals can be devices belonging to the same user or different users. The data-sharing terminals can access the hotspot terminal as long as they have the identification information of the hotspot terminal and the corresponding password, if required, to access the hotspot terminal.

As referred hereinafter, a hotspot can be a Wi-Fi hotspot or any other types of network access point accessible to devices with wireless network capabilities. The hotspot can be created on one of the devices (*e.g.,* a hotspot or connecting terminal) and detected and accessed by one or more other devices (*e.g*., data-sharing terminals). The hotspot can have a corresponding ID, such as a name or an identifier in the form of a string of alphanumeric numbers (and/or other characters). The hotspot ID can be entered by a user or automatically set to a default by the terminal. The hotspot can also require a password to access. The password can also be set by a user or by default. Once the hotspot is created on the hotspot terminal, the ID associated with the hotspot can be broadcast so that the hotspot can be found by other terminals.

The hotspot created on the hotspot terminal can be used by one or more other terminals (*e.g*., data sharing terminals) to connect to a network. The network accessible through the hotspot terminal can be any network such as the Internet, local area network (LAN), wide area network (WAN), cellular network, Wi-Fi network, and virtual private network (VPN). Various services including data sharing services and/or applications, such as microblogs and cloud sharing services can be provided over the network. The data-sharing services/applications may be hosted on one or more data-sharing application servers on the network. The data sharing services and/or applications can allow multiple terminals, including data sharing terminals and hotspot terminals, to share data with each other. The types of data shared using these services/applications can include, but are not limited to, text, numeric, image, video, audio, and other types of multimedia data. The one or more data-sharing application server can be a cloud server. The cloud server can provide limited or unlimited amount of storage space for each user. Each user can access the data sharing services/applications hosted on the cloud server by signing into his/her account and having a copy of the data to be shared stored in the cloud server.

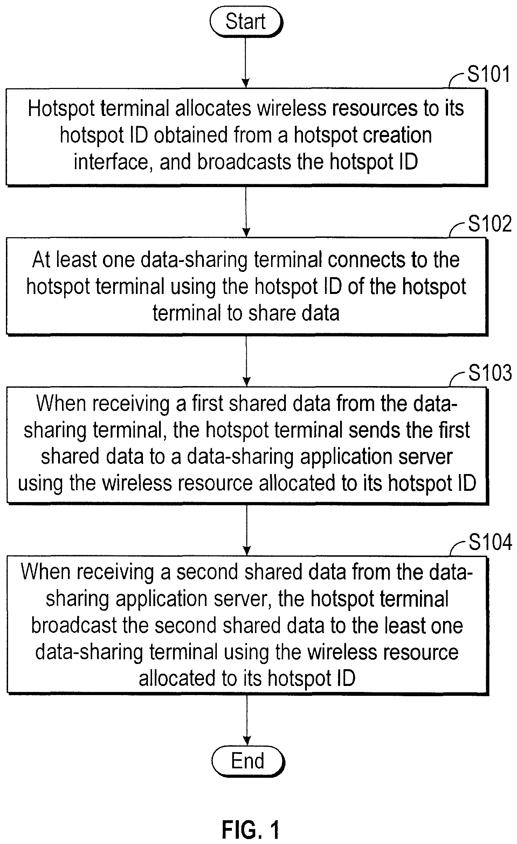

Fig. 1 is a flow chart illustrating a method of facilitating data sharing, according to an embodiment of the present disclosure. The method of this embodiment includes the following exemplary steps.

S101: A terminal can allocate at least one wireless resource to the terminal's wireless hotspot ID obtained from a wireless hotspot creation interface. The terminal can broadcast the wireless hotspot ID.

The at least one wireless resource can include the resources of a wireless network card or mobile communication resources. The terminal can be a terminal capable of creating its own wireless hotspot.

When no external hotspot or other network access point is available, the terminal can automatically display a hotspot creation interface to prompt the user to make the terminal a hotspot so that one or more data-sharing terminals can use this terminal as a hotspot to connect to a network. Alternatively, the user can manually open the hotspot creation interface, as needed, to make the terminal a hotspot for connecting one or more data-sharing terminals to a network.

The hotspot ID of the terminal obtained from the hotspot creation interface can be user-entered or set by default. After the user confirms the newly-created hotspot, the terminal can allocate at least one wireless resource to the hotspot and associate the allocated at least one wireless resource with the hotspot ID.

The terminal with the newly created wireless hotspot can be referred to as a hotspot (or connecting) terminal.

When the hotspot terminal is a mobile phone or any other types of mobile terminal, the 2G/3G communication module of the mobile terminal can be used by one or more data-sharing terminals as the at least one wireless resource associated with the hotspot ID of the hotspot terminal for sharing data over a network. When the hotspot terminal is a PC, the resources of the wireless network card of the PC can be the at least one wireless resource associated with the hotspot ID of the hotspot terminal used by one or more data-sharing terminals to share data over the network.

S102: At least one data-sharing terminal can connect to the hotspot terminal using the hotspot terminal's hotspot ID. The at least one data-sharing terminal can share data with other terminals.

The way in which the at least one data-sharing terminal connects to the hotspot terminal based on the hotspot terminal's hotspot ID can be similar to the existing way in which a device uses an SSID to connect to a Wi-Fi hotspot or other types of network access points.

S101 and S102 can be a part of a process of creating a hotspot on a hotspot terminal and having data-sharing terminals connecting to the hotspot. After the data-sharing terminal connects to the network via the hotspot terminal, S103 and S104 can be performed.

It should be noted that, after the hotspot terminal allocates wireless network card resources to be a hotspot terminal, the hotspot terminal can act as a hotspot as long as the wireless network card resources or mobile connection resources remain connected to a network.

S103: When receiving a first shared data from a data-sharing terminal, the hotspot terminal can transmit the first shared data to a data-sharing application server using the at least one wireless resource allocated to its hotspot ID.

S104: When receiving a second shared data from the data sharing application server, the hotspot terminal can broadcast the second shared data to the at least one data-sharing terminal using the at least one wireless resource allocated to its hotspot ID.

The data-sharing terminal can communicate with a network via the hotspot terminal to share data using, for example, microblogs, cloud sharing, and other types of data-sharing applications. It should be understood that the hotspot terminal itself can also use the at least one wireless resource allocated to its hotspot ID for running a local data sharing application to share data over a network.

This embodiment of the disclosure can allow a user to create a hotspot on a smart terminal to be used for connecting to a network to enable data sharing when no other network access point is available.

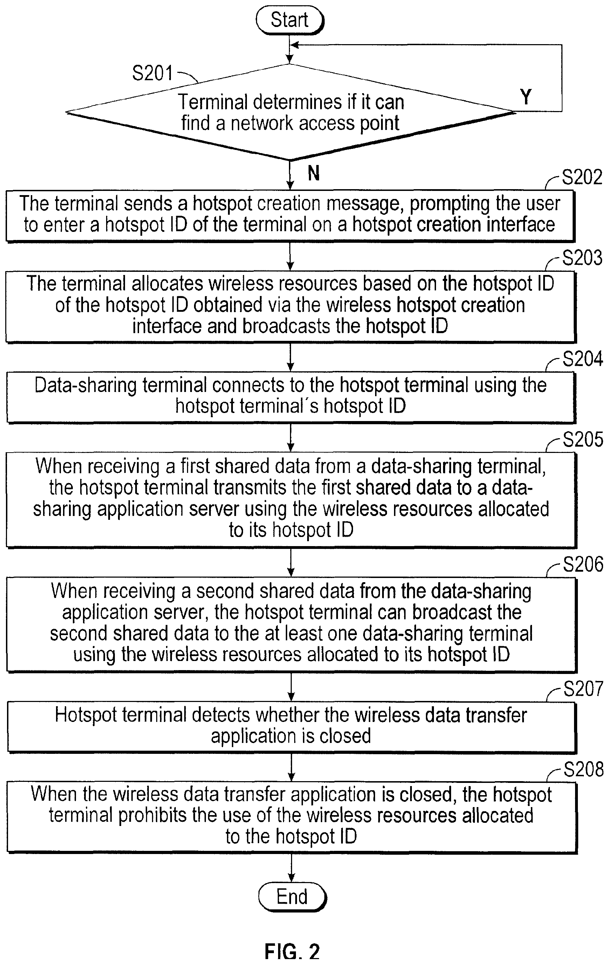

Fig. 2 is a flow chart illustrating a method of facilitating data sharing, according to another embodiment of the present disclosure.

S201: A terminal can determine if it can find a network access point.

The terminal can scan for any access points for connecting to a network. If none exists, S202 can be performed. If at least one access point is found, the terminal can continue to monitor so that, when no network access point is available, it can immediately notify the user that a hotspot can be created on the terminal to enable one or more data-sharing terminals to perform data-sharing or other types of network operations. The terminal can also display one or more available network access points to the user and, at the same time, perform the following step S202. This can allow the user to choose to connect to the network either via an available network access point or by creating a hotspot on the terminal using a hotspot ID obtained from the hotspot creation interface. The terminal can be a terminal capable of creating its own hotspot.

S202: The terminal can send a hotspot creation message, prompting the user to enter a hotspot ID of the terminal on the hotspot creation interface.

The user can select a hotspot ID to enter onto the hotspot creation interface. In addition, the user can also set a password for connecting to the terminal when the terminal serves as a hotspot.

S203: The terminal can allocate at least one wireless resource to the terminal's wireless hotspot ID obtained via the wireless hotspot creation interface. The terminal can broadcast the wireless hotspot ID.

Specifically, in this embodiment, the terminal can call the hotspot creation command. The terminal can allocate wireless network card resources to its hotspot ID and associate the allocated wireless network card resources with the hotspot ID. One or more other data-sharing terminals can connect to the wireless network card resources associated with the hotspot ID and, in turn, connect to a network using the wireless network card resources. It should be noted that, after the terminal allocates wireless network card resources to be a hotspot terminal, the hotspot terminal can act as a hotspot as long as the wireless network card resources or mobile connection resources remain connected to a network.

S204: At least one data-sharing terminal can connect to the hotspot terminal using the hotspot terminal's hotspot ID. The at least one data-sharing terminal can share data with other terminals. Specifically, the way in which the at least one data-sharing terminal connects to the hotspot terminal based on the hotspot terminal's hotspot ID can be similar to the existing way in which a device uses an SSID to connect to a Wi-Fi hotspot or other types of network access points.

S205: When receiving a first shared data from a data-sharing terminal, the hotspot terminal can transmit the first shared data to a data-sharing application server using the at least one wireless resource allocated to its hotspot ID.

S206: When receiving a second shared data from the data-sharing application server, the hotspot terminal can broadcast the second shared data to the at least one data-sharing terminal using the at least one wireless resource allocated to its hotspot ID.

When the hotspot terminal is forwarding data to corresponding data-sharing terminals, it can also share its own data. To that end, the hotspot terminal can use the at least one wireless resource allocated to its hotspot ID for running a local data sharing application.

S207: The hotspot terminal can detect whether the wireless data transfer application is closed.

S208: When the wireless data transfer application is detected to be closed, the hotspot terminal can prevent the use of the at least one wireless resource allocated to the hotspot ID. In this embodiment, when the terminal's wireless data transmission application is detected to be closed, the at least one wireless resource allocated to the terminal's hotspot ID can be turned off, thereby preventing the use of the at least one wireless resource allocated to the terminal's hotspot ID. It should be understood that, in other embodiments, the at least one wireless resource allocated to the terminal's hotspot ID can be manually turned off, as the user desires.

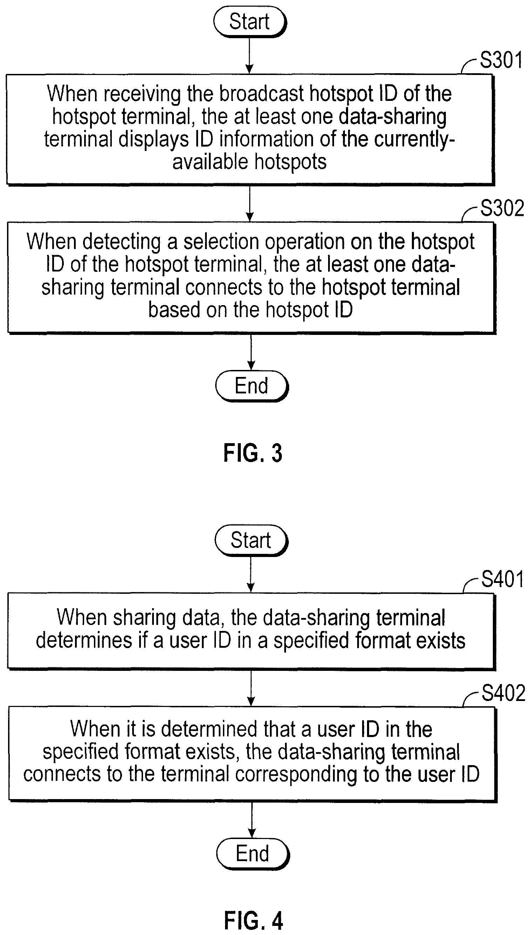

Fig. 3 is a flowchart illustrating an exemplary process of a data-sharing terminal connecting to another terminal serving as a hotspot, according to an embodiment of the present disclosure.

S301: When receiving a broadcast hotspot ID of the hotspot terminal, the at least one data-sharing terminal can display the identification information of the currently-connectable hotspots, which can include the hotspot ID of the hotspot terminal.

S302: When a selection operation on the hotspot ID of the hotspot terminal is detected, the at least one data-sharing terminal can connect to the hotspot terminal via the hotspot ID of the hotspot terminal.

The data-sharing terminal can display the currently-available network access points and the broadcast hotspot ID of the hotspot terminal to the user for the user to select. Based on the ID information selected by the user, the data-sharing terminal can connect to the corresponding network access point or hotspot terminal. Similarly, the way in which the data-sharing terminal connects to the currently-available network access points or hotspot terminal based on the hotspot ID information can be the same way in which a device uses an SSID to connect to a Wi-Fi hotspot.

In this embodiment, when no network access point is available, the user can be prompted to create a hotspot on the hotspot terminal to allow one or more data-sharing terminals to connect to a network via the hotspot terminal. This can allow the user to create a hotspot on a smart terminal for connecting to a network to share data, even when there is no network access point available.

Fig. 4 is a flowchart illustrating a method of facilitating data sharing, according to an embodiment of the present disclosure. The method of this embodiment includes the following steps.

S401: When sharing data, the data-sharing terminal can determine if a user ID in a specified format exists. The user ID in the specified format can be used for identifying a corresponding terminal as the hotspot terminal.

S402: When it is determined that a user ID in the specified format exists, the data-sharing terminal can connect to the terminal corresponding to the user ID.

Setting the terminal corresponding to the user ID as a hotspot terminal can include: the terminal allocating at least one wireless resource based on the terminal's hotspot ID obtained from the hotspot creation interface, the terminal setting the user ID logged into a local data sharing application as the user ID in the specified format, and transmitting shared data to a data-sharing application server based on the user ID in the specified format. The terminal can be a terminal capable of creating its own hotspot.

Specifically, when a user ID in the specified format is detected, the data-sharing terminal can display the ID information of the currently-available hotspots. The hotspot IDs can include the user ID in the specified format. When a selection operation on the user ID is detected, the data-sharing terminal can connect to a terminal corresponding to the user ID.

In addition, S402 can include, when detecting a user ID in the specified format, the data-sharing terminal displaying the ID information of the currently-available hotspots, the ID information of the currently-connectable hotspot including the user ID in the specified format. When a selection operation on the user ID in the specified format is detected, the data-sharing terminal can connect to a terminal corresponding to the user ID.

In this embodiment, when a connectable hotspot terminal in the system is detected, the user can be prompted to connect to a network via the hotspot terminal, thus providing the user with multiple options for connecting to the network. Also, this can allow the user to create a hotspot on a smart device for connecting to the network to share data when no network access point is available.

Below is a detailed description of the terminals and systems involved in facilitating data sharing, according to the embodiments of the disclosure.

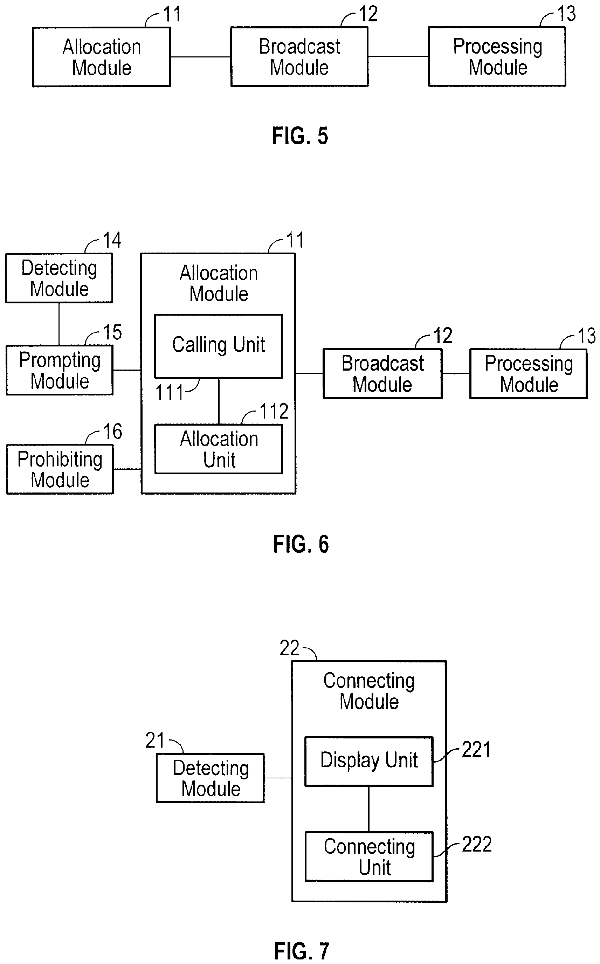

Fig. 5 is a block diagram illustrating the exemplary structure of a connecting (*i.e.,* hotspot) terminal for facilitating data sharing, according to an embodiment of the present disclosure. The connecting terminal in this embodiment can be a PC, a smartphone, or any other terminals including a wireless communication module and capable of connecting to a network. The connecting terminal can include the following modules.

An allocation module 11 for allocating at least one wireless resource to the hotspot ID obtained from the hotspot creation interface. A broadcast module 12 for broadcasting the hotspot ID of the connecting terminal to enable one or more data-sharing terminals to connect to the connecting terminal based on the hotspot ID of the terminal.

A processing module 13 for transmitting shared data to a data-sharing application server by using the at least one wireless resource allocated to the hotspot ID of the connecting terminal, when receiving a first shared data from a data-sharing terminal. The processing module can also broadcast a second shared data to the at least one data-sharing terminal using the at least one wireless resource allocated to the hotspot ID of the connecting terminal, when receiving the second shared data from the data-sharing application server.

When no external hotspot or other network access point is available, the connecting terminal can automatically display a corresponding hotspot creation interface to prompt the user to make the connecting terminal a hotspot so that one or more data-sharing terminals can use the connecting terminal as a hotspot to connect to a network. Alternatively, the user can manually open the hotspot creation interface, as needed, to make the connecting terminal a hotspot for connecting one or more data-sharing terminals to a network.

The hotspot ID of the connecting terminal obtained from the hotspot creation interface can be user-entered or set by default. After the user confirms the creation of the hotspot, the allocation module 11 can allocate at least one wireless resource to the hotspot and associate the allocated at least one wireless resource with the hotspot ID.

When the connecting terminal is a mobile phone or any other mobile terminal, the 2G/3G communication module of the mobile terminal can be used as the at least one wireless resource associated with the hotspot ID of the connecting terminal to enable one or more data-sharing terminals to share data over the network. When the connecting terminal is a PC, the wireless network card resources of the PC can be used by the allocation module 11 as the at least one wireless resource associated with the hotspot ID of the connecting terminal. This can allow one or more data-sharing terminals to share data over the network via the wireless network card of the connecting terminal, when the connecting terminal is acting as a hotspot.

The way in which the at least one data-sharing terminal connects to the connecting terminal based on the hotspot ID of the connecting terminal can be similar to the existing way in which a device uses an SSID to connect to a Wi-Fi hotspot or other types of network access points.

It should be noted that, after the allocation module 11 allocates wireless network card resources for a hotspot (*i.e.,* connecting) terminal, the hotspot terminal can act as a hotspot as long as the wireless network card resources or mobile connection resources remain connected to a network.

The one or more data-sharing terminals can communicate with a network via the connecting terminal acting as a hotspot. Data transmitted from a data-sharing terminal can be processed and forwarded by the processing module 13 of the connecting module, to achieve data sharing through, for example, microblogs, cloud sharing, and other types of data-sharing applications. It should be understood that the hotspot terminal itself can also use the at least one wireless resource allocated to its hotspot ID for running a local data sharing application to share data over a network.

In this embodiment, when no network access point is available, the user can be prompted to create a hotspot on the connecting terminal to allow one or more data-sharing terminals to connect to a network via the connecting terminal. This can allow the user to create a hotspot on a smart terminal for connecting to a network to share data even when there is no network access point available.

Fig. 6 is a block diagram illustrating the exemplary structure of a connecting terminal for facilitating data sharing, according to another embodiment of the disclosure. In this embodiment, the connecting terminal can include the same allocation module 11, broadcast module 12, and processing module 13 of the above-described embodiment. In addition, the connecting terminal can also include the following modules.

A hotspot detection module 14 for detecting whether the connecting terminal can find a network access point.

A prompting module 15 for sending a message to prompt the user to enter a hotspot ID for the connecting terminal on a hotspot creation interface when no network access point is found.

The hotspot detection module 14 can scan for available network access points, such as Wi-Fi hotspots, for connecting to a network. If none exists, the hotspot detection module 14 can notify the prompting module 15. If at least one network access point is found, the prompting module 15 can present the available network access point to the user, and at the same time, issue a message for creating a hotspot. This can allow the user to choose to connect to the network either via an available network access point or by creating a hotspot on the terminal using a hotspot ID obtained from the hotspot creation interface. On the hotspot creation interface, the user can enter the hotspot ID, and also set a password for connecting to the connecting terminal when the connecting terminal is used as a hotspot.

Additionally, as illustrated in Fig. 6, the allocation module 11 can include the following optional units.

A calling unit 111 for calling commands for creating a hotspot.

An allocation unit 112 for allocating wireless network card resources and associate the allocated wireless network card resources to the hotspot ID of the terminal.

In addition, the processing module 13 in this embodiment can also use the at least one wireless resource allocated to its hotspot ID for running a local data sharing application to share data over a network.

Additionally, as illustrated in Fig. 6, the terminal can also optionally include a prohibiting module 16.

The prohibiting module 16 can prohibit the use of the at least one wireless resource allocated to the hotspot ID when the wireless data transmission application on the terminal is detected to be closed.

In this embodiment, when detecting the terminal's wireless data transmission application is closed, the prohibiting module 16 can turn off the at least one wireless resource allocated to the hotspot ID of the connecting terminal, thereby prohibiting the use of the at least one wireless resource allocated to the hotspot ID of the connecting terminal. It should also be noted that, in other embodiments, the at least one wireless resource allocated to the hotspot ID of the connecting terminal can be manually turned off, as the user desires.

In this embodiment, when no network access point is available, the user can be prompted to create a hotspot on the connecting terminal to allow one or more data-sharing terminals to connect to a network via the connecting terminal. This can allow the user to create a hotspot on a smart terminal for connecting to a network to share data even when there is no network access point available.

Fig. 7 is a block diagram illustrating the exemplary structure of a data-sharing terminal, according to an embodiment of the present disclosure. The data-sharing terminal in this embodiment can be any smart terminal equipped with a wireless communication module. The data-sharing terminal can connect to a network via Wi-Fi hotspots or any other types of network access points. The data-sharing terminal can also connect to the network via a terminal that can create its own hotspot, as discussed in the embodiments above. The data-sharing terminal of this embodiment can include the following modules.

A detecting module 21 for detecting a user ID in a specified format when sharing data. The user ID in the specified format can be used for identifying a terminal as a hotspot terminal.

A connecting module 22 for connecting the data-sharing terminal to the hotspot terminal corresponding to the user ID in the specified format, when the user ID in the specified format is detected.

Setting the terminal corresponding to the user ID in the specified format as a hotspot terminal can include: the terminal allocating at least one wireless resource based on the terminal's hotspot ID obtained from the hotspot creation interface, the terminal setting the user ID logged into a local data sharing application as the user ID in the specified format, and transmitting shared data to a data-sharing application server based on the user ID in the specified format.

Specifically, when the detecting module 21 detects a user ID in the specified format, the data-sharing terminal can display the hotspot IDs of the currently-available hotspots. The hotspot IDs can include the user ID in the specified format. When detecting a selection operation on the user ID in the specified format, the connecting module 22 can connect to the hotspot terminal corresponding to the user ID.

More specifically, as illustrated in Fig. 7, the connecting module 22 can include the following units.

A display unit 221 for displaying the ID information of the currently-available hotspots when a user ID in a specified format is detected. The ID information of the hotspots can include the user ID in the specified format. The ID information of the available hotspots can be displayed to the user in a list format.

A connecting unit 222 for connecting to the hotspot terminal corresponding to the user ID in the specified format, when a selection operation on the user ID is detected.

In this embodiment, when no network access point is available, the user can be prompted to create a hotspot on the hotspot terminal, thereby allowing other terminals to connect to a network via the hotspot terminal to share data. This can allow the user to create a hotspot on any smart terminal to connect to the network for facilitating data sharing even when no network access point is available.

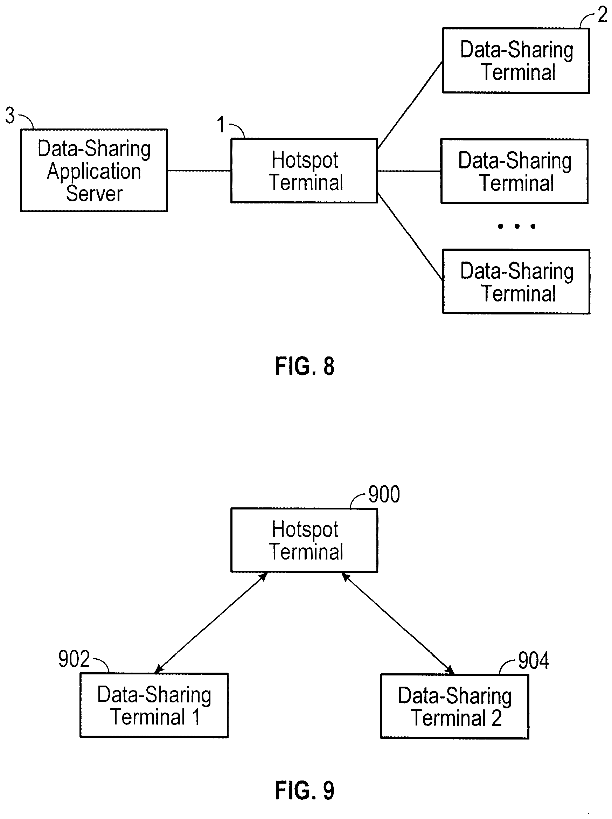

Fig. 8 is a block diagram illustrating the exemplary structure of a system for facilitating data sharing, according to an embodiment of the present disclosure. The system of this embodiment can include multiple terminals, among which can be a hotspot terminal 1, at least one data-sharing terminal 2, and data-sharing application server 3. The data-sharing terminal can share data using microblog, cloud sharing, and other data sharing applications. It should be noted that, when terminal 1 acts as a hotspot, it can also share its own data through microblog, cloud sharing, and other data sharing applications.

More specifically, terminal 1 in this embodiment can be the connecting (*i.e.,* hotspot) terminals of Figs. 5 and 6. The data-sharing terminal 2 can be the data-sharing terminal of Fig. 7.

Specifically, terminal 1 in this embodiment can allocate at least one wireless resource based on a hotspot ID of the terminal obtained from a hotspot creation interface and broadcast the hotspot ID. The at least one wireless resource can include wireless network card resource or mobile communication resources.

The at least one data-sharing terminal 2 can connect to the connecting terminal by using the hotspot ID of the connecting terminal.

The terminal 1 can transmit a first shared data to the data-sharing application server 3 using at least one wireless resource allocated to its hotspot ID when receiving the first shared data from a data-sharing terminal 2.

The terminal 1 can broadcast a second shared data to the at least one data-sharing terminal using the at least one wireless resource allocated to its hotspot ID when receiving the second shared data from the data sharing application server 3.

When no external Wi-Fi hotspot or other network access point is available, the connecting terminal 1 can automatically display a corresponding hotspot creation interface to prompt the user to make the connecting terminal a hotspot so that other data-sharing terminals 2 can use the connecting terminal as a hotspot to connect to a network. Alternatively, the user can manually open the hotspot creation interface, as needed, to make the connecting terminal a hotspot for connecting other data-sharing terminals to a network.

The hotspot ID of the connecting terminal obtained from the hotspot creation interface can be user-entered or set by default. After the user confirms the creation of the hotspot, the connecting terminal 1 can allocate at least one wireless resource and associate the allocated at least one wireless resource to its hotspot ID.

When the connecting terminal is a mobile phone or other mobile terminals, the 2G/3G communication module of the mobile terminal can be used as the at least one wireless resource associated with the hotspot ID of the connecting terminal 1 to enable one or more data-sharing terminals 2 to exchange data over the network. When the terminal is a PC, the wireless network card resources of the PC can be used by the allocation module 11 as the at least one wireless resource associated with the hotspot ID of the connecting terminal. This can allow one or more data-sharing terminals 2 to share data over the network via the wireless network card of the connecting terminal when the connecting terminal is acting as a hotspot.

The way in which the at least one data-sharing terminal 2 connects to the connecting terminal 1 based on the terminal's hotspot ID can be similar to the existing way in which a device uses an SSID to connect to a Wi-Fi hotspot or other types of network access points.

It should be noted that, after the terminal 1 allocates wireless network card resources to become a hotspot terminal, the hotspot terminal can act as a hotspot as long as the wireless network card resources or mobile connection resources remain connected to a network.

The data-sharing terminal 2 can communicate with a network via the hotspot terminal 1 to share data using, for example, microblogs, cloud sharing, and other types of data-sharing applications. It should be understood that the hotspot terminal 1 itself can also use the at least one wireless resource allocated to its hotspot ID for running a local data sharing application to share data over a network.

When receiving the broadcast hotspot ID of the hotspot terminal 1, the at least one data-sharing terminal 2 can display identification information of the currently-connectable hotspots, which can include the hotspot ID of the hotspot terminal. When detecting a selection operation on the hotspot ID of the hotspot terminal, the at least one data-sharing terminal can connect to the hotspot terminal based on the hotspot ID of the hotspot terminal 1.

The data-sharing terminal 2 can display the currently-available network access points and the broadcast hotspot ID of the hotspot terminal to the user for the user to select. Based on the ID selected by the user, the data-sharing terminal 2 can connect to the corresponding network access point or hotspot terminal 1. Similarly, the way in which the data-sharing terminal 2 connects to the currently-available network access points or the hotspot terminal 1 based on the hotspot ID can be the same as the existing way in which a device uses an SSID to connect to a Wi-Fi hotspot or other types of network access points.

In this embodiment, when no network access point is available, the user can be prompted to create a hotspot on the terminal to allow one or more data-sharing terminals to connect to a network via the hotspot terminal. This allows the user to create a hotspot on a smart terminal for connecting to a network to share data even when there is no network access point available.

Fig. 9 is a block diagram illustrating the exemplary structure of another system for facilitating data sharing among multiple devices, according to another embodiment of the disclosure. The network in this embodiment can be different from the one illustrated in Fig. 8 in that it does not require a data-sharing application server that hosts data-sharing services/applications. As illustrated, multiple data-sharing terminals 902 and 904 can be connected a hotspot terminal 900. The same processes discussed in the above-disclosed embodiments can be used to create a hotspot on the hotspot terminal 900. More specifically, the hotspot terminal 900 can determine whether any network access point is available. If none is available (or even if there are existing hotspots), the hotspot terminal 900 can prompt the user to create a hotspot on the hotspot terminal 900. A hotspot creation interface can be displayed to the user on the hotspot terminal, from which a hotspot ID and an optional password can be set to create the hotspot.

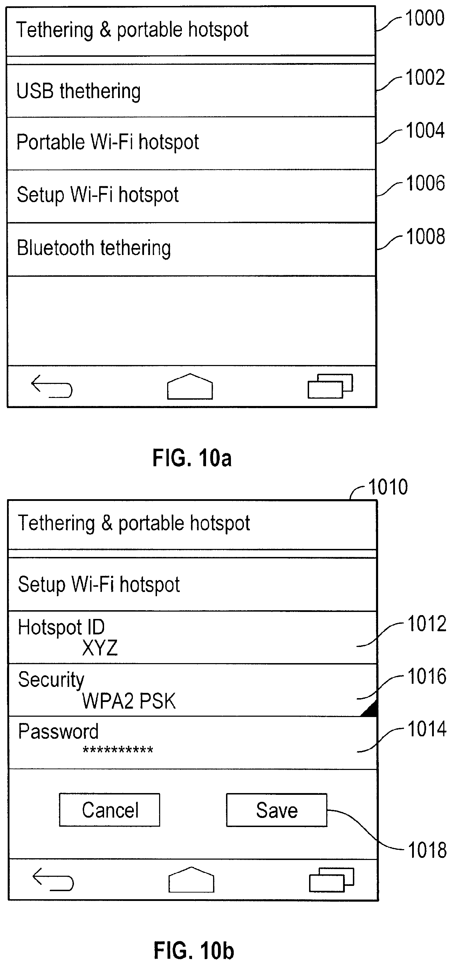

Figs. 10a and 10b illustrate two exemplary screens as a part of the hotspot creation interface, according to an embodiment of the disclosure. Fig. 10a illustrates a screen for managing "Tethering & portable hotspot" 1000. This "Tethering & portable hotspot" screen 1000 can be opened up from a home menu of the terminal. In this embodiment, the "Tethering & portable hotspot" screen 1000 can provide a number of menu options including, for example, "USB tethering" 1002, "Portable Wi-Fi hotspot" 1004, "Set up Wi-Fi hotspot" 1006, and "Bluetooth tethering" 1008. Selecting the "Portable Wi-Fi hotspot" option can display a screen listing the currently-available Wi-Fi hotspots. Selecting the "Set up Wi-Fi hotspot" screen can open a hotspot-creation screen (e.g., screen 1010 in Fig. 10b) for creating a Wi-Fi hotspot on the terminal. In this embodiment, when the terminal determines that there is no available Wi-Fi hotspot, the hotspot-creation screen can be automatically displayed to prompt the user to create a hotspot on the terminal. In other embodiments, a message or an alert can be displayed in a pop-up window or as a part of another screen, when no Wi-Fi hotspot can be detected. The message or alert can include an option for the user to open up the screen shown in Fig. 10b.

Fig. 10b illustrates an exemplary hotspot creation screen 1010. To set up a hotspot on the terminal, a hotspot ID 1012 (*e.g.,* XYZ) can be entered by the user or set by default. Optionally, the user can also set up a password 1014 to provide a level of security for the hotspot being created. The password can be shown or hidden as it is entered by the user. In addition, the hotspot creation screen 1010 can also display the security protocol/standard (*e.g*., WPA2 PSK) 1016 associated with this Wi-Fi hotspot. In some embodiments, the user can select different security protocols/standards from a dropdown list. After the user enters the required information (*e.g*., Hotspot ID), he can press the save button 1018 to activate the newly-created hotspot.

Referring back to Fig. 9, the hotspot terminal 900 can allocate at least one wireless resource to the hotspot ID. The at least one wireless resource can be, for example, wireless network card resources or mobile communication resources. The hotspot ID can be broadcast to the other terminals within a particular range.

The broadcast hotspot ID can be received on the data-sharing terminals 902, 904. For example, a message or an alert can be displayed on these terminals 902, 904, notifying the user of a newly-discovered hotspot. Alternatively, the hotspot can be found when the user manually opens up the Wi-Fi configuration interface on the data-sharing terminals 902, 904. By selecting the hotspot ID from the interface and, if required, entering the correct password, the data-sharing terminals 902, 904 can connect to the hotspot on the hotspot terminal 900. When other devices, such as the data-sharing terminals 902, 904 are connected to the hotspot terminal 100 via the hotspot on the hotspot terminal, a wireless local area network can essentially be formed including the hotspot terminal 900 and the two data-sharing terminals 902, 904. Although only two data-sharing terminals are illustrated in Fig. 9, it should be understood that additional data-sharing terminals can also connect to the wireless network in a similar fashion.

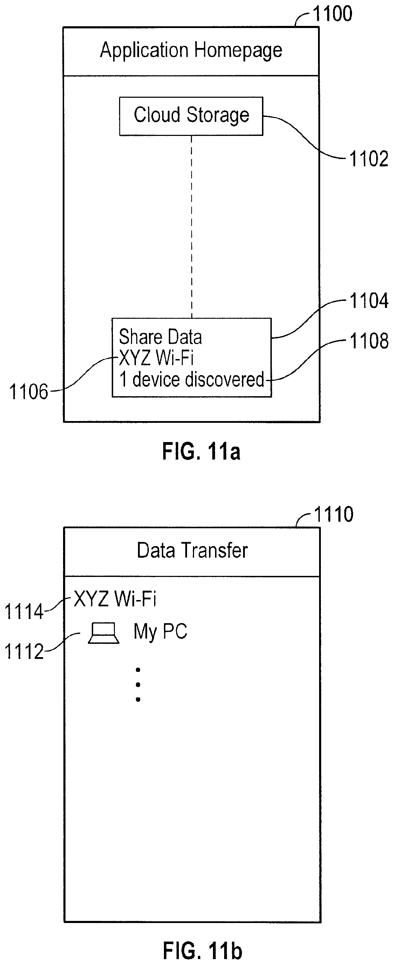

Once connected, data can be shared between the data-sharing terminals 902, 904 over the network via the hotspot terminal 900. This can be achieved by, for example, using a data-sharing application on the data-sharing terminals. Figs. 11a-d illustrate exemplary screens of a data-sharing application for transmitting data to another terminal on the local area network.

Fig. 11a illustrates an application home screen 1100 including one or more selectable options 1102, 1104 for user selection. For example, a cloud storage option 1102 can connect the device to a cloud server when the terminal is connected to, for example, a cellular network or the Internet. In this embodiment, the application home screen 1100 can also include a Share Data option 1104. This option can be for sharing data with other terminals via a local Wi-Fi network, such as one created using a hotspot terminal, as described above. The Share Data option 1104 can also identify the name of the Wi-Fi network (*e.g*., XYZ) 1106 to which the terminal is currently connected. In addition, the Share Data option can also display the number of other terminals (*i.e.,* devices) 1108 currently connected to the same Wi-Fi network. When a user selects the Share Data option 1104, a Data Transfer screen can be displayed.

Fig. 11b illustrates an exemplary Data Transfer screen 1110. As shown in Fig. 11b, the Data Transfer screen 1110 can display the hotspot ID (*e.g.,* XYZ) 1114 of the Wi-Fi network and a list of other terminals currently connected to the Wi-Fi network. In this example, one terminal, My PC 1112, can be found on the network and listed on the Data Transfer screen 1110. It should be understood that the number of terminals shown on this screen can depend on the number of terminals connected to the same Wi-Fi hotspot. The user can select one of the listed terminals as the target for receiving shared data by, for example, clicking on the icon associated with the terminal.

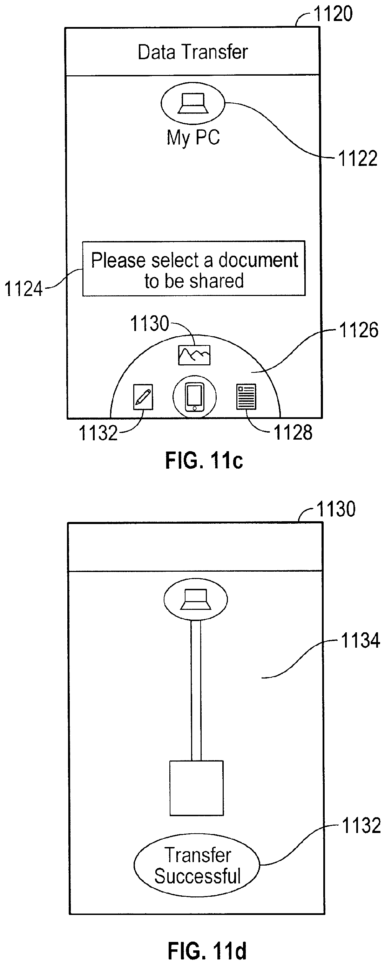

Fig. 11c illustrates an exemplary screen 1120 for selecting data to be transmitted to the target terminal. As illustrated, the screen 1120 can include an icon representing the target terminal (*e.g.,* My PC) 1122. Optionally, a message 1124 asking the user to select data for transfer can also be shown on the screen. In this embodiment, data on the local terminal can be categorized based on its type. Each category can be represented by a selectable icon 1128, 1130, 1132 in a menu 1126 displayed on the screen 1120. For example, icon 1130 can open up a local photo album application for the user to select one or more pictures to be shared with the target terminal. Similarly, icons 1128, 1132 can be selected if the user wants to share a text document or a song, respectively, with the other terminal. It should be understood that the data selection process and interface can vary in different embodiments. In some embodiments, multiple files can be selected for transmission at the same time. This can be achieved by, for example, allowing the user to use checkboxes to identify the files to be transferred in each category. After the user selects the data to be transmitted, he can send the selected data by, for example, swiping upwards on the screen or touching a Send button, etc.

Fig. 11d illustrates an exemplary confirmation screen when the selected data is successfully transmitted. As shown, a message 1132 indicating a successful transfer can be displayed on the screen 1130. Other visual and/or audio confirmations, such as an animation 1134 showing the file moving towards the icon representing the target device can also be shown. On the target terminal, a message can be displayed to alert a user of the incoming data. The user can have the options of view, save, or reject the incoming data.

Referring back to Fig. 9, the illustrated system can provide a mechanism to transfer data between the data-sharing terminals 902, 904 via a wireless hotspot created on the hotspot terminal 900. By connecting to the hotspot, the terminals can form its own local wireless network. This network can allow data to be transferred wirelessly and in a simple fashion among the devices even when there is no external network available. The system disclosed in this embodiment can be particularly useful when the user wants to transfer data from one device to another device when there is no network available. As described above, all he needs is a terminal that can create its own wireless hotspot and broadcast the hotspot to the other terminals. Once the terminals are connected via the hotspot, data can be transmitted back and forth among the terminals.

Based on the above-described embodiments, a person skilled in the art can understand that the embodiments can be implemented in software on the necessary hardware platform or in hardware. Based on this understanding, the above-discussed embodiments can be embodied in a software product. The software product can be stored in a non-transitory readable medium (such as a random access memory (RAM)/read-only memory (ROM), floppy disk, or CD) of a PC. The product can include a number of commands for causing a computer (e.g., PC, server, or network equipment) to execute each embodiment or a method disclosed in a portion of an embodiment.

In some embodiments, one or more of these modules on the hotspot (*i.e.,* connecting) terminal and one or more data-sharing terminals can be stored and/or transported within any non-transitory computer-readable storage medium for use by or in connection with an instruction execution system, apparatus, or device, such as a computer-based system, processor-containing system, or other system that can fetch the instructions from the instruction execution system, apparatus, or device and execute the instructions. In the context of this document, a "non-transitory computer-readable storage medium" can be any medium that can contain or store the program for use by or in connection with the instruction execution system, apparatus, or device. The non-transitory computer readable storage medium can include, but is not limited to, an electronic, magnetic, optical, electromagnetic, infrared, or semiconductor system, apparatus or device, a portable computer diskette (magnetic), a random access memory (RAM) (magnetic), a read-only memory (ROM) (magnetic), an erasable programmable read-only memory (EPROM) (magnetic), a portable optical disc such a CD, CD-R, CD-RW, DVD, DVD-R, or DVD-RW, or flash memory such as compact flash cards, secured digital cards, USB memory devices, memory sticks, and the like.

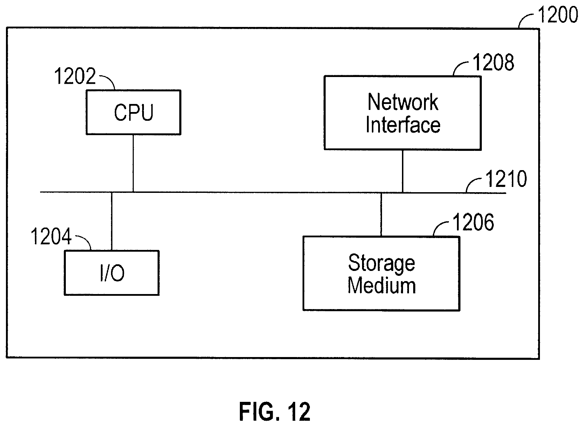

The non-transitory computer readable storage medium can be part of a computing system serving as the server or the terminals. Fig. 12 illustrates exemplary common components of one such computing system. As illustrated, the system 1200 can include a central processing unit (CPU) 1202, I/O components 1204 including, but not limited to one or more of display, keypad, touch screen, speaker, and microphone, storage medium 1206 such as the ones listed in the last paragraph, and network interface 1208, all of which can be connected to each other via a system bus 1210. The storage medium 1206 can include the modules of Figs. 5-7 depending on whether the system is a hotspot terminal or a data-sharing terminal or both.

Although embodiments of this disclosure have been fully described with reference to the accompanying drawings, it is to be noted that various changes and modifications will become apparent to those skilled in the art. Such changes and modifications are to be understood as being included within the scope of embodiments of this disclosure as defined by the appended claims.

## Claims

1. A method for facilitating data sharing, comprising:
allocating (S101), by a hotspot terminal, at least one wireless resource to a hotspot ID obtained from a hotspot creation interface, wherein the at least one wireless resource comprises wireless network card resources or mobile communication resources,
broadcasting, by the hotspot terminal, the hotspot ID so that a data-sharing terminal can connect (S102) to the hotspot terminal using the hotspot ID,
when receiving a first shared data from the data-sharing terminal, transmitting (S103), by the hotspot terminal, the first shared data to a data-sharing application server in the Internet using the at least one wireless resource allocated to the hotspot ID, and
when receiving a second shared data from the data-sharing application server in the Internet, broadcasting (S104), by the hotspot terminal, the second shared data to the data-sharing terminal using the at least one wireless resource allocated to the hotspot ID,
wherein allocating the at least one wireless resource to the hotspot ID obtained from the hotspot creation interface comprises:
calling, by the hotspot terminal, a hotspot creation command, and
allocating, by the hotspot terminal, the wireless network card resources or the mobile communication resources, and associating the allocated wireless network card resources or the mobile communication resources with the hotspot ID,
wherein the method further comprises:
running, by the hotspot terminal, a local data sharing application using the at least one wireless resource allocated to the hotspot ID, so that the hotspot terminal shares data over the Internet using the at least one wireless resource allocated to the hotspot ID.

2. The method of claim 1, comprising: prior to allocating the at least one wireless resource to the hotspot ID,
detecting (S201), by the hotspot terminal, whether a network access point can be found, and
if not, sending (S202) a hotspot creation message to alert a user to enter a hotspot ID on the hotspot creation interface.

3. A connecting terminal for facilitating data sharing, comprising:
an allocation module (11) configured to allocate at least one wireless resource to a hotspot ID obtained from a hotspot ID creation interface, wherein the at least one wireless resource comprises wireless network card resources or mobile communication resources,
a broadcast module (12) configured to broadcast the hotspot ID so that a data-sharing terminal can connect to the connecting terminal using the hotspot ID, and
a processing module (13) configured to,
when receiving a first shared data from the data-sharing terminal, transmit the first shared data to a data-sharing application server in the Internet using the at least one wireless resource allocated to the hotspot ID, and
when receiving a second shared data from the data-sharing application server in the Internet, broadcast the second shared data to the data-sharing terminal using the at least one wireless resource allocated to the hotspot ID,
wherein the allocation module (11) comprises:
a calling unit (111) configured to call a hotspot creation command, and
an allocation unit (112) configured to allocate the wireless network card resources or the mobile communication resources and associating the allocated wireless network card resources or the mobile communication resources with the hotspot ID,
wherein the processing module (13) is configured to run a local data sharing application using the at least one wireless resource allocated to the hotspot ID, so that the connecting terminal shares data over the Internet using the at least one wireless resource allocated to the hotspot ID.

4. The connecting terminal of claim 3, comprising:
a detecting module (14) configured to detect whether a network access point can be found; and
a prompting module (15) configured to, when no network access point is found, send a message to prompt a user to enter a hotspot ID on the hotspot creation interface.

5. A system for facilitating data sharing, the system including
a hotspot terminal (1),
at least one data-sharing terminal (2), and
a data-sharing application server (3), the at least one data-sharing terminal for sharing data,
wherein
the hotspot terminal (1) is configured to allocate at least one wireless resource to a hotspot ID obtained from a hotspot creation interface and broadcast the hotspot ID, wherein the at least one wireless resource comprises wireless network card resources or mobile communication resources,
the at least one data-sharing terminal (2) is configured to connect to the hotspot terminal via the hotspot ID,
the hotspot terminal (1) is configured to, when receiving a first shared data from the at least one data-sharing terminal (2), transmit the first shared data to the data-sharing application server (3) in the Internet using the at least one wireless resource allocated to the hotspot ID, and
the hotspot terminal (1) is further configured to, when receiving a second shared data from the data-sharing application server (3) in the Internet, broadcast the second shared data to the at least one data-sharing terminal (2) using the at least one wireless resource allocated to the hotspot ID,
wherein the hotspot terminal (1), when allocating the at least one wireless resource to the hotspot ID obtained from the hotspot creation interface, is further configured to:
call a hotspot creation command, and
allocate the wireless network card resources or the mobile communication resources, and associate the allocated wireless network card resources or the mobile communication resources with the hotspot ID,
wherein the hotspot terminal (1) is further configured to run a local data sharing application using the at least one wireless resource allocated to the hotspot ID, so that the hotspot terminal shares the data over the Internet using the at least one wireless resource allocated to the hotspot ID.

6. The system of claim 5,
wherein the at least one data-sharing terminal (2) is further configured to:
when receiving the hotspot ID, display identification information of currently-connectable hotspots, wherein the identification information includes the hotspot ID of the hotspot terminal, and
when detecting a selection operation on the hotspot ID of the hotspot terminal, connect to the hotspot terminal based on the hotspot ID.

## Patentansprüche

1. Verfahren zum Ermöglichen eines Teilens von Daten, umfassend:
Allozieren (S101), durch ein Hotspot-Terminal, zumindest einer drahtlosen Ressource zu einer Hotspot-ID, die von einer Hotspot-Erzeugungsschnittstelle erhalten wurde, wobei die zumindest eine drahtlose Ressource drahtlose Netzwerkkartenressourcen oder Mobilkommunikationsressourcen umfasst,
Broadcasten, durch das Hotspot-Terminal, der Hotspot-ID, sodass ein Datenteilungsterminal sich zu dem Hotspot-Terminal unter Verwendung der Hotspot-ID verbinden kann (S102),
wenn erste geteilte Daten von dem Datenteilungsterminal erhalten werden, Übertragen (S103), durch das Hotspot-Terminal, der ersten geteilten Daten zu einem Datenteilungsanwendungsserver in dem Internet unter Verwendung der zumindest einen drahtlosen Ressource, die zu der Hotspot-ID alloziert ist, und
wenn zweite geteilte Daten von dem Datenteilungsanwendungsserver in dem Internet erhalten werden, Broadcasten (S104), durch das Hotspot-Terminal, der zweiten geteilten Daten zu dem Datenteilungsterminal unter Verwendung der zumindest einen drahtlosen Ressource, die zu der Hotspot-ID alloziert ist,
wobei das Allozieren der zumindest einen drahtlosen Ressource zu der Hotspot-ID, die von der Hotspot-Erzeugungsschnittstelle erhalten wurde, umfasst:
Aufrufen, durch das Hotspot-Terminal, eines Hotspot-Erzeugungsbefehls, und
Allozieren, durch das Hotspot-Terminal, der drahtlosen Netzwerkkartenressourcen oder der Mobilkommunikationsressourcen, und Assoziieren der allozierten drahtlosen Netzwerkkartenressourcen oder der Mobilkommunikationsressourcen zu der Hotspot-ID,
wobei das Verfahren des Weiteren umfasst:
Ausführen, durch das Hotspot-Terminal, einer lokalen Datenteilungsanwendung unter Verwendung der zumindest einen drahtlosen Ressource, die zu der Hotspot-ID alloziert ist, sodass das Hotspot-Terminal Daten über das Internet unter Verwendung der zumindest einen drahtlosen Ressource, die zu der Hotspot-ID alloziert ist, teilt.

2. Verfahren nach Anspruch 1, umfassend: vor dem Allozieren der zumindest einen drahtlosen Ressource zu der Hotspot-ID,
Detektieren (S201), durch das Hotspot-Terminal, ob ein Netzwerkzugangspunkt gefunden werden kann, und
falls nicht, Senden (202) einer Hotspot-Erzeugungsnachricht, um einen Nutzer darauf aufmerksam zu machen, eine Hotspot-ID an der Hotspot-Erzeugungsschnittstelle einzugeben.

3. Verbindungsterminal zum Ermöglichen eines Teilens von Daten, umfassend:
ein Allozierungsmodul (11), das ausgebildet ist zum Allozieren zumindest einer drahtlosen Ressource zu einer Hotspot-ID, die von einer Hotspot-ID-Erzeugungsschnittstelle erhalten wurde, wobei die zumindest eine drahtlose Ressource drahtlose Netzwerkkartenressourcen oder Mobilkommunikationsressourcen umfasst,
ein Broadcastmodul (12), das ausgebildet ist zum Broadcasten der Hotspot-ID, sodass ein Datenteilungsterminal sich zu dem Verbindungsterminal unter Verwendung der Hotspot-ID verbinden kann, und
ein Verarbeitungsmodul (13), das ausgebildet ist zum,
wenn erste geteilte Daten von dem Datenteilungsterminal erhalten werden, Übertragung der ersten geteilten Daten zu einem Datenteilungsanwendungsserver in dem Internet unter Verwendung der zumindest einen drahtlosen Ressource, die zu der Hotspot-ID alloziert ist und,
wenn zweite geteilte Daten von dem Datenteilungsanwendungsserver in dem Internet erhalten werden, Broadcasten der zweiten geteilten Daten zum dem Datenteilungsterminal unter Verwendung der zumindest einen drahtlosen Ressource, die zu der Hotspot-ID alloziert ist,
wobei das Allozierungsmodul (11) umfasst:
eine Aufrufeinheit (111), die ausgebildet ist zum Aufrufen eines Hotspot-Erzeugungsbefehls, und
einer Allozierungseinheit (112), die ausgebildet ist zum Allozieren der drahtlosen Netzwerkkartenressourcen oder der Mobilkommunikationsressourcen und zum Assoziieren der allozierten drahtlosen Netzwerkkartenressourcen oder der Mobilkommunikationsressourcen zu der Hotspot-ID,
wobei das Verarbeitungsmodul (13) ausgebildet ist, eine lokale Datenteilungsanwendung unter Verwendung der zumindest einen drahtlosen Ressource, die zu der Hotspot-ID alloziert ist, auszuführen, sodass das Verbindungsterminal Daten über das Internet unter Verwendung der zumindest einen drahtlosen Ressource, die zu der Hotspot-ID alloziert ist, teilt.

4. Verbindungsterminal nach Anspruch 3, umfassend:
ein Detektionsmodul (14), das ausgebildet ist zum Detektieren, ob ein Netzwerkzugangspunkt gefunden werden kann; und
ein Aufforderungsmodul (15), das ausgebildet ist, zum, wenn kein Netzwerkzugangspunkt gefunden wird, eine Nachricht zu senden, um einen Nutzer aufzufordern, eine Hotspot-ID an der Hotspot-Erzeugungsschnittstelle einzugeben.

5. System zum Ermöglichen eines Teilens von Daten, wobei das System beinhaltet
ein Hotspot-Terminal (1),
zumindest ein Datenteilungsterminal (2), und
einen Datenteilungsanwendungsserver (3), wobei das zumindest eine Datenteilungsterminal zum Teilen von Daten vorgesehen ist,
wobei
das Hotspot-Terminal (1) ausgebildet ist zum Allozieren zumindest einer drahtlosen Ressource zu einer Hotspot-ID, die von einer Hotspot-Erzeugungsschnittstelle erhalten wurde, und zum Broadcasten der Hotspot-ID, wobei die zumindest eine drahtlose Ressource drahtlose Netzwerkkartenressourcen oder Mobilkommunikationsressourcen umfasst,
das zumindest eine Datenteilungsterminal (2) ausgebildet ist, sich zu dem Hotspot-Terminal über die Hotspot-ID zu verbinden,
das Hotspot-Terminal (1) ausgebildet ist zum, wenn erste geteilte Daten von dem zumindest einen Datenteilungsterminal (2) erhalten werden, Übertragung der ersten geteilten Daten zu dem Datenteilungsanwendungsserver (3) in dem Internet unter Verwendung der zumindest einen drahtlosen Ressource, die zu der Hotspot-ID alloziert ist, und
das Hotspot-Terminal (1) des Weiteren ausgebildet ist zum, wenn zweite geteilte Daten von dem Datenteilungsanwendungsserver (3) in dem Internet erhalten werden, Broadcasten der zweiten geteilten Daten zu dem zumindest einen Datenteilungsterminal (2) unter Verwendung der zumindest einen drahtlosen Ressource, die zu der Hotspot-ID alloziert ist,
wobei das Hotspot-Terminal (1), wenn es die zumindest eine drahtlose Ressource zu der Hotspot-ID, die von der Hotspot-Erzeugungsschnittstelle erhalten wurde, alloziert, des Weiteren ausgebildet ist zum:
Aufrufen eines Hotspot-Erzeugungsbefehls, und
Allozieren der drahtlosen Netzwerkkartenressourcen oder der Mobilkommunikationsressourcen, und Assoziieren der allozierten drahtlosen Netzwerkkartenressourcen oder der Mobilkommunikationsressourcen zu der Hotspot-ID,
wobei das Hotspot-Terminal (1) des Weiteren ausgebildet ist zum Ausführen einer lokalen Datenteilungsanwendung unter Verwendung der zumindest einen drahtlosen Ressource, die zu der Hotspot-ID alloziert ist, sodass das Hotspot-Terminal die Daten über das Internet unter Verwendung der zumindest einen drahtlosen Ressource, die zu der Hotspot-ID alloziert ist, teilt.

6. System nach Anspruch 5,
wobei das zumindest eine Datenteilungsterminal (2) des Weiteren ausgebildet ist zum:
wenn die Hotspot-ID empfangen wird, Anzeigen einer Identifikationsinformation von aktuell verbindbaren Hotspots, wobei die Identifikationsinformation die Hotspot-ID des Hotspot-Terminals beinhaltet, und
wenn eine Auswahloperation an der Hotspot-ID des Hotspot-Terminals detektiert wird, Verbinden zu dem Hotspot-Terminal basierend auf der Hotspot-ID.

## Revendications

1. Procédé destiné à faciliter un partage de données, comprenant:
faire allouer (S101), par un terminal hotspot, au moins une ressource sans fil à un identifiant de hotspot obtenu à partir d'une interface de création de hotspot, dans lequel ladite au moins une ressource sans fil comprend des ressources de carte de réseau sans fil ou des ressources de communication mobile,
faire diffuser, par ledit terminal hotspot, l'identifiant de hotspot de sorte qu'un terminal de partage de données peut se connecter (S102) au terminal hotspot en utilisant l'identifiant de hotspot,
lorsque de premières données partagées sont reçues en provenance du terminal de partage de données, faire transmettre (S103), par le terminal hotspot, les premières données partagées à un serveur d'application de partage de données sur Internet en utilisant ladite au moins une ressource sans fil allouée à l'identifiant de hotspot, et
lorsque de deuxièmes données partagées sont reçues en provenance du serveur d'application de partage de données sur Internet, faire diffuser (S104), par le terminal hotspot, les deuxièmes données partagées au terminal de partage de données en utilisant ladite au moins une ressource sans fil allouée à l'identifiant de hotspot,
dans lequel l'allocation de ladite au moins une ressource sans fil à l'identifiant de hotspot obtenu de l'interface de création de hotspot comprend:
faire appeler, par le terminal hotspot, une commande de création de hotspot, et
faire allouer, par le terminal hotspot, les ressources de carte de réseau sans fil ou les ressources de communication mobile, et faire associer à l'identifiant de hotspot les ressources de carte de réseau sans fil allouées ou les ressources de communication mobile,
dans lequel le procédé comprend en outre:
faire exécuter, par le terminal hotspot, une application locale de partage de données en utilisant ladite au moins une ressource sans fil allouée à l'identifiant de hotspot, de sorte que le terminal hotspot partage des données via l'Internet en utilisant ladite au moins une ressource sans fil allouée à l'identifiant de hotspot.

2. Procédé selon la revendication 1, comprenant: avant d'allouer ladite au moins une ressource sans fil à l'identifiant de hotspot,
faire détecter (S201), par le terminal hotspot, si un point d'accès au réseau peut être trouvé, et,
si non, envoyer (S202) un message de création de hotspot pour avertir un utilisateur d'entrer un identifiant de hotspot sur l'interface de création de hotspot.

3. Terminal de connexion pour faciliter un partage de données, comprenant:
un module d'allocation (11) configuré pour allouer au moins une ressource sans fil à un identifiant de hotspot obtenu à partir d'une interface de création d'identifiant de hotspot, dans lequel ladite au moins une ressource sans fil comprend des ressources de carte de réseau sans fil ou des ressources de communication mobile,
un module de diffusion (12) configuré pour diffuser l'identifiant de hotspot de sorte qu'un terminal de partage de données peut se connecter au terminal de connexion en utilisant l'identifiant de hotspot, et
un module de traitement (13) configuré pour,
lorsque de premières données partagées sont reçues en provenance du terminal de partage de données, transmettre les premières données partagées à un serveur d'application de partage de données sur Internet en utilisant ladite au moins une ressource sans fil allouée à l'identifiant de hotspot, et,
lorsque de deuxièmes données partagées sont reçues en provenance du serveur d'application de partage de données sur Internet, diffuser les deuxièmes données partagées au terminal de partage de données en utilisant ladite au moins une ressource sans fil allouée à l'identifiant de hotspot,
dans lequel le module d'allocation (11) comprend:
une unité d'appel (111) configuré pour appeler une commande de création de hotspot, et
une unité d'allocation (112) configurée pour allouer les ressources de carte de réseau sans fil ou les ressources de communication mobile, et pour associer à l'identifiant de hotspot les ressources de carte de réseau sans fil allouées ou les ressources de communication mobile,
dans lequel ledit module de traitement (13) est configuré pour exécuter une application locale de partage de données en utilisant ladite au moins une ressource sans fil allouée à l'identifiant de hotspot, de sorte que le terminal de connexion partage des données via l'Internet en utilisant ladite au moins une ressource sans fil allouée à l'identifiant de hotspot.

4. Terminal de connexion selon la revendication 3, comprenant:
un module de détection (14) configuré pour détecter si un point d'accès au réseau peut être trouvé; et
un module d'invitation (15) configuré pour, lorsqu'aucun point d'accès au réseau n'est trouvé, envoyer un message pour inviter un utilisateur à entrer un identifiant de hotspot sur l'interface de création de hotspot.

5. Système destiné à faciliter un partage de données, le système comprenant un terminal hotspot (1),
au moins un terminal de partage de données (2), et
un serveur d'application de partage de données (3), ledit au moins un terminal de partage de données étant prévu pour le partage de données,
dans lequel
le terminal hotspot (1) est configuré pour allouer au moins une ressource sans fil à un identifiant de hotspot obtenu à partir d'une interface de création de hotspot et pour diffuser l'identifiant de hotspot, dans lequel ladite au moins une ressource sans fil comprend des ressources de carte de réseau sans fil ou des ressources de communication mobile,
ledit au moins un terminal de partage de données (2) est configuré pour se connecter au terminal hotspot via l'identifiant de hotspot,
le terminal hotspot (1) est configuré pour, lorsque de premières données partagées sont reçues en provenance dudit au moins un terminal de partage de données (2), transmettre les premières données partagées au serveur d'application de partage de données (3) sur Internet en utilisant ladite au moins une ressource sans fil allouée à l'identifiant de hotspot, et
le terminal hotspot (1) est configuré en outre pour, lorsque de deuxièmes données partagées sont reçues en provenance du serveur d'application de partage de données (3) sur Internet, diffuser les deuxièmes données partagées audit au moins un terminal de partage de données (2) en utilisant ladite au moins une ressource sans fil allouée à l'identifiant de hotspot,
dans lequel le terminal hotspot (1), lorsqu'il alloue ladite au moins une ressource sans fil à l'identifiant hotspot obtenu de l'interface de création de hotspot, est configuré en outre pour:
appeler une commande de création de hotspot, et
allouer les ressources de carte de réseau sans fil ou les ressources de communication mobile et pour associer à l'identifiant de hotspot les ressources de carte de réseau sans fil allouées ou les ressources de communication mobile,
dans lequel le terminal hotspot (1) est configuré en outre pour exécuter une application locale de partage de données en utilisant ladite au moins une ressource sans fil allouée à l'identifiant de hotspot, de sorte que le terminal hotspot partage les données via l'Internet en utilisant ladite au moins une ressource sans fil allouée à l'identifiant de hotspot.

6. Système selon la revendication 5,
dans lequel ledit au moins un terminal de partage de données (2) est configuré en outre pour:
lorsque l'identifiant de hotspot est reçu, afficher une information d'identification de hotspots actuellement connectables, l'information d'identification comprenant l'identifiant de hotspot du terminal hotspot, et pour,
lorsqu'une opération de sélection sur l'identifiant de hotspot du terminal hotspot est détectée, connecter au terminal hotspot sur la base de l'identifiant de hotspot.
